# EUROPÄISCHE PATENTSCHRIFT

(11) **EP 3 611 432 B1**
(45) Veröffentlichungstag und Bekanntmachung des Hinweises auf die Patenterteilung: **26.01.2022**
(21) Anmeldenummer: 19191221.1
(22) Anmeldetag: 12.08.2019
(51) Int. Cl.: F23D 11/00, F23L 5/02

(54) **FAHRZEUGHEIZGERÄT**
VEHICLE HEATER
CHAUFFAGE POUR VÉHICULE

(30) Priorität: 17.08.2018 DE 102018120030
(43) Veröffentlichungstag der Anmeldung: 19.02.2020
(73) Patentinhaber: Eberspächer Climate Control Systems GmbH, 73730 Esslingen (DE)
(72) Erfinder: Collmer, Andreas, 73773 Aichwald (DE); Grotstollen, Uwe, 73734 Esslingen (DE); Haefner, Michael, 70469 Stuttgart (DE); Findeis, Thorsten, 73095 Albershausen (DE)
(74) Vertreter: Ruttensperger Lachnit Trossin Gomoll

(56) Entgegenhaltungen:
- EP-A2- 1 927 488
- DE-B3- 10 303 688
- RU-U1- 162 165
- US-A- 4 623 310

## Beschreibung

Die vorliegende Erfindung betrifft ein beispielsweise als Standheizung oder Zuheizer betreibbares Fahrzeugheizgerät. Ein derartiges Fahrzeugheizgerät umfasst im Allgemeinen ein in Richtung einer Gehäuselängsachse langgestrecktes Heizgerätegehäuse mit einer einen Verbrennungsluftströmungsraum nach radial außen begrenzenden Gehäuseumfangswand, eine an dem Heizgerätegehäuse getragene Brennkammerbaugruppe mit einer Verbrennungsluft aus dem Verbrennungsluftströmungsraum aufnehmenden Brennkammer, sowie ein beispielsweise als Seitenkanalgebläse ausgebildetes Verbrennungsluftgebläse mit einem an dem Heizgerätegehäuse getragenen Verbrennungsluftgebläsegehäuse.

Bei derartigen Fahrzeugheizgeräten besteht grundsätzlich die Anforderung, dass die zum Zuführen und Abführen verschiedener Medien, wie der Verbrennungsluft, des flüssigen Brennstoffs und des bei der Verbrennung in einer Brennkammer entstehenden Abgases, dienenden Leitungen bzw. Stutzen oder Öffnungen so am Heizgerät positioniert sind, dass diese einem in Fahrzeugen im Allgemeinen vorgesehenen, einheitlichen Anschlussmuster entsprechen, so dass Heizgeräte verschiedener Bauart in einfacher Weise in verschiedene Fahrzeuge integriert werden können. Da abhängig von der erforderlichen oder gewünschten Heizleistung derartige Heizgeräte verschiedene Baugrößen aufweisen, ist es vor allem bei Heizgeräten größerer Bauart schwierig, diese hinsichtlich der daran vorzusehenden Anschlüsse so zu gestalten, dass eine Übereinstimmung mit dem vereinheitlichten Anschlussmuster hergestellt werden kann.

Aus der EP 1 927 488 A2 ist ein Fahrzeugheizgerät bekannt, bei welchem ein Verbrennungsluftgebläsegehäuse über ein ringartiges Zwischengehäuse an einem Heizgerätegehäuse getragen ist. An dem Verbrennungsluftgebläsegehäuse ist ein eine Öffnung in einer Wand des Heizgerätegehäuses durchgreifender Verbrennungslufteinlassstutzen vorgesehen, in welchem ein zu einem ringartigen Förderkanal des Verbrennungsluftgebläses führender Verbrennungsluftdurchtrittskanal ausgebildet ist.

Aus der DE 103 03 688 B3 ist ein Fahrzeugheizgerät bekannt, bei welchem ein Verbrennungslufteinlassstutzen zu einem in einem Verbrennungsluftgebläsegehäuse ausgebildeten, ringartigen Förderkanal führt. Der Verbrennungslufteinlassstutzen erstreckt sich durch einen Strömungsraum für die in dem Heizgerät zu erwärmende Luft und durchsetzt eine Öffnung in einer diesen Strömungsraum begrenzenden Außenwand des Heizgeräts.

Aus der RU 162165 U1 ist ein Fahrzeugheizgerät gemäß dem Oberbegriff des Anspruchs 1 bekannt.

Es ist die Aufgabe der vorliegenden Erfindung, ein Fahrzeugheizgerät so zu gestalten, dass es in einfacher Art und Weise an einen in einem Fahrzeug vorgesehenen Anschlussbereich mit einem definierten Anschlussmuster angepasst bzw. angeschlossen werden kann.

Erfindungsgemäß wird diese Aufgabe gelöst durch ein Fahrzeugheizgerät, umfassend:
- ein in Richtung einer Gehäuselängsachse langgestrecktes Heizgerätegehäuse mit einer einen Verbrennungsluftströmungsraum nach radial außen begrenzenden Gehäuseumfangswand,
- eine an dem Heizgerätegehäuse getragene Brennkammerbaugruppe mit einer Verbrennungsluft aus dem Verbrennungsluftströmungsraum aufnehmenden Brennkammer,
- ein Verbrennungsluftgebläse mit einem an dem Heizgerätegehäuse getragenen Verbrennungsluftgebläsegehäuse, wobei in dem Verbrennungsluftgebläsegehäuse eine Verbrennungslufteintrittsöffnung zum Eintritt von Verbrennungsluft in das Verbrennungsluftgebläse vorgesehen ist,
- eine an dem Heizgerätegehäuse getragene Verbrennungsluftanschlusseinheit mit einem Verbrennungsluftdurchtrittskanal, wobei in einem ersten Kanalöffnungsbereich der Verbrennungsluftdurchtrittskanal zur Aufnahme von Verbrennungsluft nach außen offen ist und in einem zweiten Kanalöffnungsbereich der Verbrennungsluftdurchtrittskanal zur Verbrennungslufteintrittsöffnung offen ist.

Die Verbrennungsluftanschlusseinheit weist zur Realisierung eines einfachen Aufbaus einen beispielsweise aus Kunststoffmaterial aufgebauten plattenartigen Anschlusseinheitkörper auf, wobei der Anschlusseinheitkörper mit einer ersten Körperseite einer Außenseite der Gehäuseumfangswand und einer Außenseite des Verbrennungsluftgebläsegehäuses gegenüberliegend positioniert ist.

Um den Austritt von Gas, insbesondere auch Abgas, aus dem Heizgerät zu unterbinden, ist ein das Verbrennungsluftgebläsegehäuse bezüglich des Heizgerätegehäuses gasdicht abschließendes, das Verbrennungsluftgebläsegehäuse bezüglich der Verbrennungsluftanschlusseinheit gasdicht abschließendes und das Heizgerätegehäuse bezüglich der Verbrennungsluftanschlusseinheit gasdicht abschließendes Dichtelement vorgesehen sein. Der Einsatz eines einzigen Dichtelements vermeidet auch zu Leckagen führende Angrenzungsbereiche verschiedener Dichtelemente aneinander.

Bei einem erfindungsgemäß aufgebauten Fahrzeugheizgerät ist derjenige Bereich, mit welchen dieses an einen in einem Fahrzeug vorgesehenen Anschlussbereich angeschlossen wird, flexibel gestaltbar. Die Entkopplung des zum Verbrennungsluftgebläse führenden Verbrennungsluftdurchtrittskanals vom Verbrennungsluftgebläse selbst und das Vorsehen dieses Kanals an der Verbrennungsluftanschlusseinheit gestatten es, diese Verbrennungsluftanschlusseinheit als Schnittstelle zwischen dem Heizgerät bzw. dem Verbrennungsluftgebläse und dem Anschlussbereich eines Fahrzeugs zu gestalten. Dies wiederum ermöglicht die Bereitstellung verschieden gestalteter Verbrennungsluftanschlusseinheiten für verschiedene Heizgeräte, um diese in einfacher Weise an in Fahrzeugen vorgesehene Anschlussbereiche mit einem grundsätzlich vereinheitlichten Anschlussmuster anschließen zu können. Es können auf diese Art und Weise die verschiedenen Systembereiche des Heizgeräts, insbesondere das Verbrennungsluftgebläse, unabhängig von dem durch den Anschlussbereich in einem Fahrzeug vorgegebenen Anschlussmuster aufgebaut bzw. dimensioniert werden, um gleichwohl über die erfindungsgemäß vorzusehende Verbrennungsluftanschlusseinheit die erforderliche Anbindung an den im Fahrzeug vorgesehenen Anschlussbereich realisieren zu können.

Beispielsweise kann für eine erhöhte Freiheit in der baulichen Ausgestaltung des Verbrennungsluftgebläses vorgesehen sein, dass die Verbrennungslufteintrittsöffnung eine im Wesentlichen radial orientierte Öffnungsmittenachse aufweist, dass ein den ersten Kanalöffnungsbereich bereitstellender erster Kanalabschnitt des Verbrennungsluftdurchtrittskanals eine im Wesentlichen radial orientierte Kanalmittenachse aufweist, und dass die Kanalmittenachse bezüglich der Öffnungsmittenachse in Richtung der Gehäuselängsachse, beispielsweise auf die Brennkammerbaugruppe zu, versetzt ist. Selbstverständlich kann ein derartiger axialer Versatz auch begleitet sein von einem Versatz in Umfangsrichtung.

Der Verbrennungsluftdurchtrittskanal kann mit seinem zweiten Kanalöffnungsbereich an der ersten Körperseite des Anschlusseinheitkörpers zur Verbrennungslufteintrittsöffnung offen sein, und an einer von der ersten Körperseite abgewandten zweiten Körperseite des Anschlusseinheitkörpers kann ein den ersten Kanalabschnitt wenigstens teilweise bereitstellender Verbrennungslufteinlassstutzen hervorstehen.

Zur Realisierung des vorangehend angesprochenen Versatzes kann in dem Anschlusseinheitkörper ein von dem ersten Kanalabschnitt zu dem zweiten Kanalöffnungsbereich führender und den zweiten Kanalöffnungsbereich bereitstellender zweiter Kanalabschnitt vorgesehen sein, wobei der zweite Kanalabschnitt eine zu der Kanalmittenachse des ersten Kanalabschnitts angewinkelte Kanalmittenachse aufweist.

Beispielsweise kann vorgesehen sein, dass das Dichtelement mit einem ersten Dichtelementenbereich zwischen einer Stirnseite der Gehäuseumfangswand und einer dieser gegenüberliegenden Stirnseite des Verbrennungsluftgebläsegehäuses positioniert ist, mit einem zweiten Dichtelementenbereich sich entlang eines Randbereichs der Verbrennungslufteintrittsöffnung erstreckend zwischen dem Verbrennungsluftgebläsegehäuse und der Verbrennungsluftanschlusseinheit positioniert ist und mit einem dritten Dichtelementenbereich in eine in der Gehäuseumfangswand ausgebildete und in Richtung der Stirnseite der Gehäuseumfangswand offene, von einer Brennstoffleitung durchsetzte Brennstoffleitungsdurchtrittsaussparung eingreifend positioniert ist.

Für die Versorgung des Fahrzeugheizgeräts mit Brennstoff kann die Verbrennungsluftanschlusseinheit eine Brennstoffleitungsdurchtrittsöffnung aufweisen, durch welche eine Brennstoffleitung sich hindurch erstrecken kann.

Um auch in diesem Bereich einen dichten Anschluss zu realisieren, kann das Dichtelement mit seinem dritten Dichtelementenbereich sich entlang eines Randbereichs der Brennstoffleitungsdurchtrittsaussparung und der Brennstoffleitungsdurchtrittsöffnung erstreckend zwischen der Gehäuseumfangswand und der Verbrennungsluftanschlusseinheit positioniert sein.

Die Verbrennungsluftanschlusseinheit kann ferner eine Abgasauslassdurchtrittsöffnung aufweisen, und ein an dem Heizgerätegehäuse vorgesehener Abgasauslassstutzen kann sich durch die Abgasauslassdurchtrittsöffnung hindurch erstrecken.

Für eine stabile Integration eines erfindungsgemäß aufgebauten Fahrzeugheizgeräts in ein Fahrzeug wird vorgeschlagen, dass an der Verbrennungsluftanschlusseinheit eine Montageformation zur festen Anbringung des Fahrzeugheizgeräts an einem Heizgeräteträger vorgesehen ist. Beispielsweise kann die Montageformation eine Mehrzahl von beispielsweise als Stehbolzen bzw. Gewindestiften ausgebildeten Montagestiften umfassen.

Insbesondere bei Ausgestaltung eines Fahrzeugheizgeräts als Luftheizgerät kann das Heizgerätegehäuse in einem Außengehäuse aufgenommen sein, so dass ein das Außengehäuse durchsetzender und das Heizgerätegehäuse umströmender Luftstrom in einem Wärmetauscherbereich des Heizgerätegehäuses Wärme aufnehmen kann. In dem Außengehäuse ist vorzugsweise eine die Verbrennungsluftanschlusseinheit aufnehmende Anschlusseinheitsöffnung vorgesehen.

Um im Bereich der Anschlusseinheitsöffnung einen gasdichten Anschluss zu gewährleisten, wird vorgeschlagen, dass ein die Verbrennungsluftanschlusseinheit bezüglich des Außengehäuses gasdicht abschließendes Anschlusseinheit-Dichtelement vorgesehen ist.

Insbesondere kann dabei das Anschlusseinheit-Dichtelement derart gestaltet sein, dass es in Zuordnung zu dem Verbrennungslufteinlassstutzen, der Brennstoffleitung, dem Abgasauslassstutzen und jedem Montagestift jeweils eine davon durchsetzte und bezüglich diesem einen gasdichten Abschluss bereitstellende Durchtrittsöffnung aufweist.

Die vorliegende Erfindung wird nachfolgend mit Bezug auf die beiliegenden Figuren detailliert beschrieben. Es zeigt:

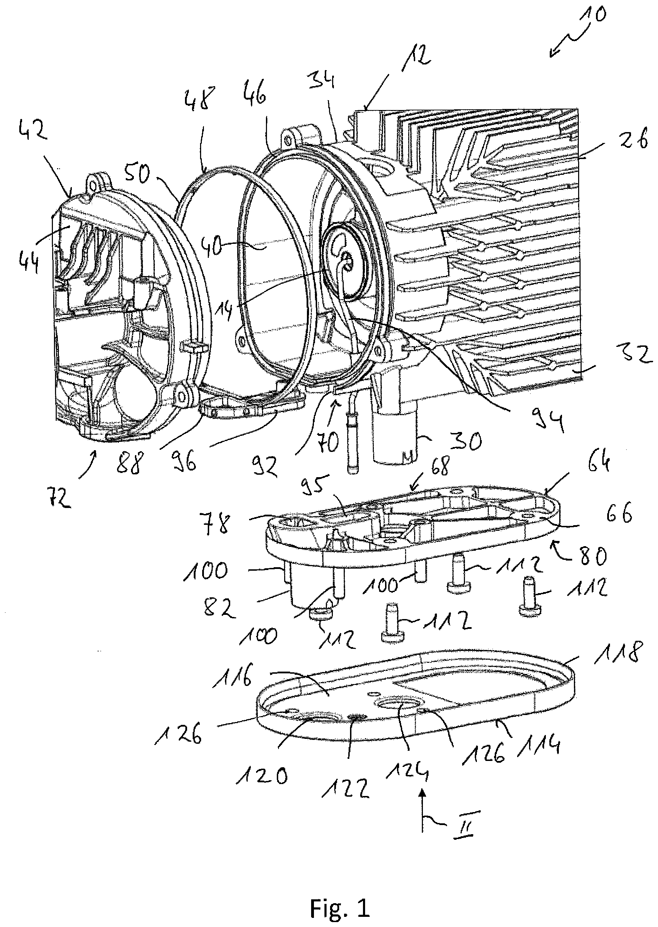

- Fig. 1: eine Teil-Explosionsdarstellung eines Fahrzeugheizgeräts;
- Fig. 2: eine Ansicht eines Anschlusseinheit-Dichtelements des Fahrzeugheizgeräts der Fig. 1 in Blickrichtung II in Fig. 1;
- Fig. 3: eine Teil-Längsschnittansicht des Fahrzeugheizgeräts der Fig. 1, geschnitten längs einer Linie III-III in Fig. 2;
- Fig. 4: eine weitere Teil-Längsschnittansicht des Fahrzeugheizgeräts der Fig. 1, geschnitten längs einer Linie IV-IV in Fig. 3;
- Fig. 5: eine Teil-Querschnittansicht des Fahrzeugheizgeräts der Fig. 1, geschnitten längs einer Linie V-V in Fig. 4;

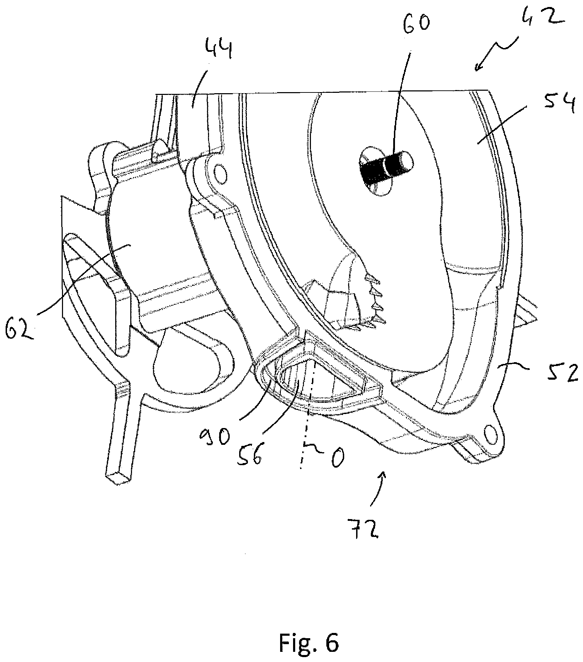

- Fig. 6: eine perspektivische Teilansicht eines Verbrennungsluftgebläses des Fahrzeugheizgeräts der Fig. 1.

In den Figuren ist ein brennstoffbetriebenes Fahrzeugheizgerät allgemein mit 10 bezeichnet. Das Fahrzeugheizgerät 10 umfasst ein im Allgemeinen als Metallgussteil bereitgestelltes Heizgerätegehäuse 12. An dem Heizgerätegehäuse 12 ist eine Brennkammerbaugruppe 14 getragen. Die Brennkammerbaugruppe 14 umfasst eine Umfangswand 16, welche zusammen mit einem Bodenbereich 18 eine Brennkammer 20 begrenzt. An die Umfangswand 16 schließt im Bereich einer Flammblende 22 ein im dargestellten Beispiel mit der Umfangswand 16 integral ausgebildetes Flammrohr 24 an. Das Flammrohr 24 erstreckt sich in einem einen Wärmetauscherbereich 26 des Heizgerätegehäuses 12 bereitstellenden Bereich desselben und begrenzt mit diesem einen Abgasrückströmraum 28. Der Abgasrückströmraum 28 ist über einen bezüglich einer Gehäuselängsachse L im Wesentlichen nach radial außen sich erstreckenden Abgasauslassstutzen 30 zur Abgabe von Abgas nach außen bzw. zu einem Abgasführungssystem offen. Im Wärmetauscherbereich 26 des Heizgerätegehäuses 12 ist ferner eine Vielzahl von im Wesentlichen in Richtung der Gehäuselängsachse L sich erstreckenden Wärmeübertragungsrippen 32 vorgesehen, welche eine von zu erwärmender Luft umströmbare Oberfläche zur Übertragung von Wärme auf die beispielsweise in einen Fahrzeuginnenraum einzuleitende Luft bereitstellen.

In einem an den Wärmetauscherbereich 26 anschließenden Bereich weist das Heizgerätegehäuse 12 eine Gehäuseumfangswand 34 auf. Diese schließt in einem Stufenbereich 36, an welchen ein Träger 38 der Brennkammerbaugruppe 14 angebunden ist, an den Wärmetauscherbereich 26 an und umgrenzt einen Verbrennungsluftströmungsraum 40 nach radial außen.

Ein als Seitenkanalgebläse ausgebildetes Verbrennungsluftgebläse 42 ist mit einem Verbrennungsluftgebläsegehäuse 44 einer Stirnseite 46 der Umfangswand 34 gegenüberliegend am Heizgerätegehäuse 12 festgelegt. Um hier einen gasdichten Anschluss zu erreichen, ist ein allgemein mit 48 bezeichnetes Dichtelement mit einem ringartigen ersten Dichtelementenbereich 50 zwischen der Stirnseite 46 der Gehäuseumfangswand 34 und einer dieser gegenüberliegenden Stirnseite 52 des Verbrennungsluftgebläsegehäuses 44 angeordnet.

Im Verbrennungsluftgebläsegehäuse 44 ist ein zur Stirnseite 52 axial offener, ringartiger Förderkanal 54 gebildet. Eine Verbrennungslufteintrittsöffnung 56 mit einer im Wesentlichen radial orientierten Öffnungsmittenachse O führt in den Förderkanal 54. Ein Förderrad 58 überdeckt an der Stirnseite 52 den Förderkanal 54 und ist an einer an der Stirnseite 52 hervorstehenden Rotorwelle 60 eines am Verbrennungsluftgebläsegehäuse 44 getragenen Gebläsemotors 62 getragen und somit durch den Gebläsemotor 62 zur Drehung antreibbar.

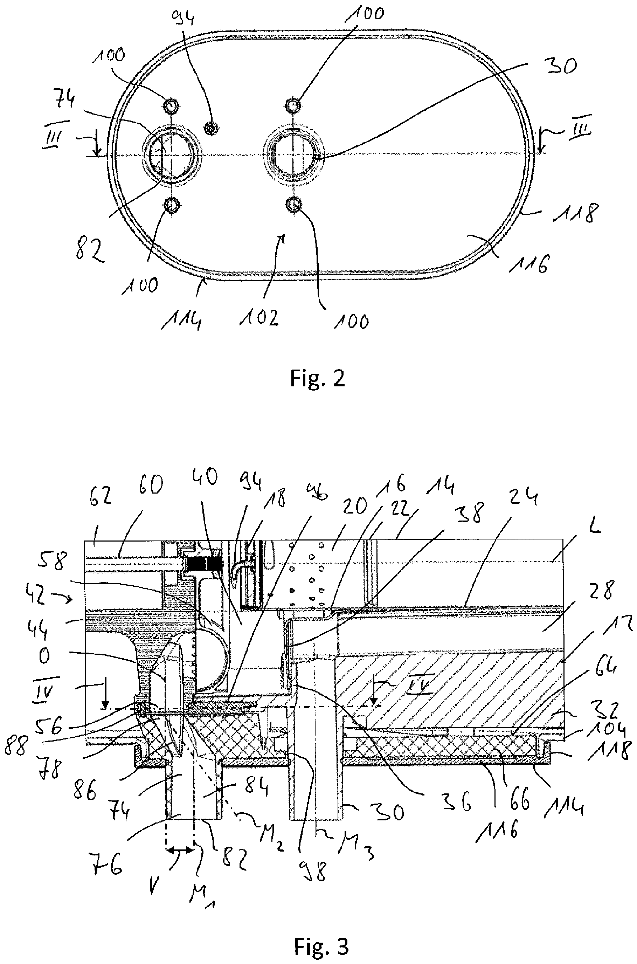

Das Fahrzeugheizgerät 10 umfasst ferner eine allgemein mit 64 bezeichnete Verbrennungsluftanschlusseinheit. Diese beispielsweise aus Kunststoffmaterial, aufgrund der besseren Temperaturbeständigkeit vorzugsweise aber aus Aluminium hergestellte Verbrennungsluftanschlusseinheit 64 umfasst einen plattenartigen Anschlusseinheitkörper 66, welcher mit einer ersten Körperseite 68 einer Außenseite 70 der Gehäuseumfangswand 34 und einer Außenseite 72 des Verbrennungsluftgebläsegehäuses 44 gegenüberliegt. Die Verbrennungsluftanschlusseinheit 64 stellt einen Verbrennungsluftdurchtrittskanal 74 bereit. Dieser ist in einem ersten Kanalöffnungsbereich 76 nach außen offen und ist in einem zweiten Kanalöffnungsbereich 78 zur Verbrennungslufteintrittsöffnung 56 im Verbrennungsluftgebläsegehäuse 44 offen. Am plattenartigen Anschlusseinheitkörper 66 steht an einer von der ersten Körperseite 68 abgewandten zweiten Körperseite 80 ein Verbrennungslufteinlassstutzen 82 hervor. Der Verbrennungslufteinlassstutzen 82 stellt einen ersten Kanalabschnitt 84 des Verbrennungsluftdurchtrittskanals 74 bereit, wobei der erste Kanalabschnitt 84 auch den ersten Kanalöffnungsbereich 76 bereitstellt bzw. im Bereich desselben nach außen offen ist. Der erste Kanalabschnitt 84 weist eine Kanalmittenachse M₁ auf, welche, sich im Wesentlichen radial erstreckend, beispielsweise zur Öffnungsmittenachse O der Verbrennungslufteintrittsöffnung 56 parallel angeordnet und bezüglich dieser in Richtung der Gehäuselängsachse L auf die Brennkammerbaugruppe 14 zu versetzt angeordnet ist. Beispielsweise können die Öffnungsmittenachse O, die Kanalmittenachse M₁ und die Gehäuselängsachse L in einer gemeinsamen, durch die Schnittebene der Darstellung der Fig. 3 repräsentierten Ebene liegen.

Im Anschlusseinheitkörperbereich 66 ist ein zweiter Kanalabschnitt 86 des Verbrennungsluftdurchtrittskanals 74 gebildet. Der zweite Kanalabschnitt 86 führt vom ersten Kanalabschnitt 84 zum zweiten Kanalöffnungsbereich 78 bzw. stellt diesen bereit. Der zweite Kanalabschnitt 86 weist eine Kanalmittenachse M₂ auf, welche bezüglich der Kanalmittenachse M₁ des ersten Kanalabschnitts 84 angewinkelt ist, so dass der zweite Kanalabschnitt 86 bezüglich des ersten Kanalabschnitts 84 schräg angestellt und den Versatz der Öffnungsmittenachse O bezüglich der Kanalmittenachse M₁ kompensierend eine Verbindung zwischen dem ersten Kanalabschnitt 84 und der Verbrennungslufteintrittsöffnung 56 im Verbrennungsluftgebläsegehäuse 44 herstellt. Dabei kann der zweite Kanalabschnitt 86 eine derartige, sich über dessen Längserstreckung ändernde Querschnittsstruktur aufweisen, dass er in seinem an den ersten Kanalabschnitt 84 anschließenden Endbereich eine der beispielsweise kreisrunden Querschnittsgeometrie des ersten Kanalabschnitts 84 entsprechende Querschnittsgeometrie aufweist und in seinem der Verbrennungslufteintrittsöffnung 56 gegenüberliegenden und den zweiten Kanalöffnungsbereich 78 bereitstellenden Endbereich eine an die D-förmige Querschnittsgeometrie der Verbrennungslufteintrittsöffnung 56 angepasste Querschnittsgeometrie aufweist.

Um dort, wo die Verbrennungsluftanschlusseinheit 64 mit dem zweiten Kanalöffnungsbereich 78 der Verbrennungslufteintrittsöffnung 56 im Verbrennungsluftgebläsegehäuse 44 an dessen Außenseite 72 gegenüberliegt, einen gegen den Austritt von Gas dichten Anschluss zu erreichen, weist das Dichtelement 48 einen zweiten Dichtelementenbereich 88 auf. Auch dieser weist eine im Wesentlichen ringartige und an die Querschnittskontur der Verbrennungslufteintrittsöffnung 56 angepasste Struktur auf und kann in einer die Verbrennungslufteintrittsöffnung 56 am Verbrennungsluftgebläsegehäuse 44 umgebend vorgesehenen nutartigen Einsenkung 90 derart aufgenommen werden, dass er zwischen der Außenseite 72 des Verbrennungsluftgebläsegehäuses 44 und dem Anschlusseinheitskörper 66 in seinem den zweiten Kanalöffnungsbereich 78 umgebenden Bereich gehalten ist. Dabei erstreckt der zweite Dichtelementenbereich 88 sich also entlang eines Randbereichs der Verbrennungslufteintrittsöffnung 56 bzw. des zweiten Kanalöffnungsbereichs 78.

In der Gehäuseumfangswand 34 des Heizgerätegehäuses 12 ist eine zu deren Stirnseite 46 axial offene Brennstoffleitungsdurchtrittsaussparung 92 vorgesehen. Eine zum Bodenbereich 18 der Brennkammerbaugruppe 14 führende Brennstoffleitung 94 erstreckt sich durch den Verbrennungsluftströmungsraum 40 und die Brennstoffleitungsdurchtrittsaussparung 92 hindurch und durchsetzt auch eine in ihrer Kontur der Brennstoffleitungsdurchtrittsaussparung 92 entsprechende Brennstoffleitungsdurchtrittsöffnung 95 im Anschlusseinheitskörper 66 der Verbrennungsluftanschlusseinheit 64. Um auch in diesem Bereich einen gegen den Austritt von Gas dichten Anschluss des Anschlusseinheitkörpers 66 an die Außenseite 70 der Gehäuseumfangswand 34 zu erreichen, weist das Dichtelement 48 einen dritten Dichtelementenbereich 96 auf. Dieser erstreckt sich vom ringartigen ersten Dichtelementenbereich 50 im Wesentlichen in dem Umfangsbereich, in welchem auch der zweite Dichtelementenbereich 88 an diesen anschließt, und in einer der Erstreckungsrichtung des zweiten Dichtelementenbereichs 88 entgegengesetzten Richtung vom ersten Dichtelementenbereich 50 weg und weist beispielsweise eine ebenfalls ringartige Struktur auf.

Ferner ist im Anschlusseinheitkörper 66 der Verbrennungsluftanschlusseinheit 64 eine Durchtrittsöffnung 98 für den Abgasauslassstutzen 30 vorgesehen. Der Abgasauslassstutzen 30 ist dabei, wie die Fig. 2 deutlich zeigt, so positioniert, dass eine Kanalmittenachse M₃ desselben in der die Kanalmittenachse M₁ des ersten Kanalabschnitts 84 des Verbrennungsluftdurchtrittskanals 74 und die Gehäuselängsachse L enthaltenden Ebene liegt.

Beispielsweise jeweils quer zur Gehäuselängsachse L beidseits des Abgasauslassstutzens 30 und des Verbrennungslufteinlassstutzens 82 sind am Anschlusseinheitkörper 66 der Verbrennungsanschlusseinheit 64 zur zweiten Körperseite 80 hervorstehende und zum Beispiel als Stehbolzen bzw. Gewindestifte ausgebildete Montagestifte 100 einer allgemein mit 102 bezeichneten Montageformation vorgesehen. Diese beispielsweise mit Außengewinde ausgebildeten Montagestifte 100 können somit in entsprechende Öffnungen eines an einem Fahrzeug vorgesehenen Anschlussbereichs eingepasst werden, so dass durch Schraubverbindung eine feste Montage des Fahrzeugheizgeräts 10 in einem Fahrzeug ermöglicht wird.

Die Positionierung der vier Montagestifte 100 entspricht dabei einem durch den Anschlussbereich vorgegebenen Anschlussmuster, ebenso wie auch die Positionierung des am Anschlusseinheitkörper 66 an der zweiten Körperseite 80 hervorstehenden Verbrennungslufteinlassstutzens 82 und die Positionierung des am Heizgerätegehäuse 12 vorgesehenen Abgasauslassstutzens 30. Auch die Positionierung der Brennstoffleitung 94 in ihrem den Anschlusseinheitkörper 66 im Bereich der Brennstoffleitungsdurchtrittsöffnung 95 durchsetzenden Bereich entspricht dem durch den Anschlussbereich in einem Fahrzeug vorgegebenen Anschlussmuster. Somit wird in einfacher Weise einerseits die feste und stabile Anbindung des Fahrzeugheizgeräts 10 an einen ein definiertes Anschlussmuster bereitstellenden Anschlussbereich eines Fahrzeugs gewährleistet, und wird andererseits gewährleistet, dass alle zur Führung von Medien vorgesehenen Leitungen bzw. Kanäle entsprechend definiert in diesen fahrzeugfesten Anschlussbereich eingebunden werden können, um einerseits Verbrennungsluft und Brennstoff zum Fahrzeugheizgerät leiten zu können und andererseits das bei der Verbrennung entstehende Abgas aus dem Fahrzeugheizgerät 10 ableiten zu können.

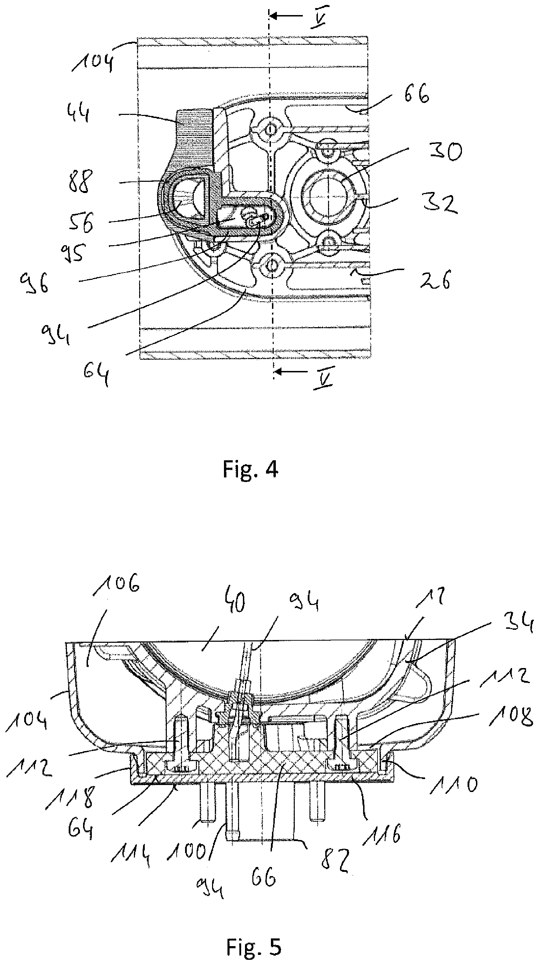

Die Fig. 4 und 5 zeigen deutlich, dass das Heizgerätegehäuse 12 in einem beispielsweise aus Kunststoffmaterial aufgebauten Außengehäuse 104 aufgenommen ist, so dass zwischen der Außenseite des Heizgerätegehäuses 12, insbesondere des Wärmetauscherbereichs 26 desselben und dem Außengehäuse 104 ein Strömungsraum 106 für die im Wärmetauscherbereich 26 zu erwärmende Luft gebildet ist. Diese Luft kann durch ein mit der Rotorwelle 60 des Gebläsemotors 62 gekoppeltes Heizluftförderrad durch den Strömungsraum 106 und somit entlang der Wärmeübertragungsrippen 32 im Wärmetauscherbereich 26 gefördert werden.

Im Außengehäuse 104 ist eine Anschlusseinheitsöffnung 108 gebildet, welche von einem Randbereich 110 umgeben ist und in welcher die Verbrennungsluftanschlusseinheit 64 aufgenommen ist. Die feste Anbindung der Verbrennungsluftanschlusseinheit 64 an das Heizgerätegehäuse 12 kann durch mehrere, die Verbrennungsluftanschlusseinheit 64 durchsetzende Schraubbolzen 112 erfolgen. Ein Anschlusseinheit-Dichtelement 114 liegt mit einem plattenartigen Körperbereich 116 an der zweiten Körperseite 80 des Anschlusseinheitkörpers 66 an und übergreift mit einem vom Körperbereich 116 abstehenden Randbereich 118 den Randbereich 110 des Außengehäuses 104 und stellt somit in diesem Bereich einen gasdichten Anschluss bereit.

In Zuordnung zu dem Verbrennungslufteinlassstutzen 82, der Brennstoffleitung 94, dem Abgasauslassstutzen 30 und jedem Montagestift 100 ist im Körperbereich 116 des Anschlusseinheit-Dichtelements 114 jeweils eine Durchtrittsöffnung 120, 122, 124 bzw. 126 vorgesehen. Diese Öffnungen 120, 122, 124, 126 sind derart dimensioniert, dass das aus elastischem Material aufgebaute Anschlusseinheit-Dichtelement mit seinem eine jeweilige dieser Öffnungen umgebenden Bereich unter Vorspannung an einer jeweiligen Außenumfangsfläche des Verbrennungslufteinlassstutzens 82, des Abgasauslassstutzens 30, der Brennstoffleitung 94 sowie der Montagestifte 100 anliegt und auch in diesem Bereich einen gasdichten Anschluss erzeugt.

Mit dem vorangehend beschriebenen Aufbau eines Fahrzeugheizgeräts, bei welchem der Verbrennungslufteinlassstutzen baulich entkoppelt ist vom Verbrennungsluftgebläse, wird die Möglichkeit geschaffen, unabhängig beispielsweise von der Dimensionierung oder Ausgestaltung des Verbrennungsluftgebläses bzw. auch des Heizgerätegehäuses den Verbrennungslufteinlassstutzen so positioniert vorzusehen, dass er insbesondere auch bezüglich des Abgasauslassstutzens eine durch einen fahrzeugfesten Anschlussbereich vorgegebene Relativpositionierung aufweist. Dies ermöglicht insbesondere den Einsatz axial größer bauender Verbrennungsluftgebläse für Heizgeräte mit größerer Heizleistung, bei welchen auch aufgrund größerer Baugröße des Förderrads des Verbrennungsluftgebläses das Verbrennungsluftgebläsegehäuse axial weiter von der Brennkammerbaugruppe weg rückt.

## Patentansprüche

1. Fahrzeugheizgerät, umfassend:
- ein in Richtung einer Gehäuselängsachse (L) langgestrecktes Heizgerätegehäuse (12) mit einer einen Verbrennungsluftströmungsraum (40) nach radial außen begrenzenden Gehäuseumfangswand (34),
- eine an dem Heizgerätegehäuse (12) getragene Brennkammerbaugruppe (14) mit einer Verbrennungsluft aus dem Verbrennungsluftströmungsraum (40) aufnehmenden Brennkammer (20),
- ein Verbrennungsluftgebläse (42) mit einem an dem Heizgerätegehäuse (12) getragenen Verbrennungsluftgebläsegehäuse (44), wobei in dem Verbrennungsluftgebläsegehäuse (44) eine Verbrennungslufteintrittsöffnung (56) zum Eintritt von Verbrennungsluft in das Verbrennungsluftgebläse (42) vorgesehen ist,
- eine an dem Heizgerätegehäuse (12) getragene Verbrennungsluftanschlusseinheit (64) mit einem Verbrennungsluftdurchtrittskanal (74), wobei in einem ersten Kanalöffnungsbereich (76) der Verbrennungsluftdurchtrittskanal (74) zur Aufnahme von Verbrennungsluft nach außen offen ist und in einem zweiten Kanalöffnungsbereich (78) der Verbrennungsluftdurchtrittskanal (74) zur Verbrennungslufteintrittsöffnung (56) offen ist,
wobei die Verbrennungsluftanschlusseinheit (64) einen plattenartigen Anschlusseinheitkörper (66) aufweist, wobei der Anschlusseinheitkörper (66) mit einer ersten Körperseite (68) einer Außenseite (70) der Gehäuseumfangswand (34) und einer Außenseite (72) des Verbrennungsluftgebläsegehäuses (44) gegenüberliegend positioniert ist, **dadurch gekennzeichnet, dass** ein das Verbrennungsluftgebläsegehäuse (44) bezüglich des Heizgerätegehäuses (12) gasdicht abschließendes, das Verbrennungsluftgebläsegehäuse (44) bezüglich der Verbrennungsluftanschlusseinheit (64) gasdicht abschließendes und das Heizgerätegehäuse (12) bezüglich der Verbrennungsluftanschlusseinheit (64) gasdicht abschließendes Dichtelement (48) vorgesehen ist.

2. Fahrzeugheizgerät nach Anspruch 1, **dadurch gekennzeichnet, dass** die Verbrennungslufteintrittsöffnung (56) eine im Wesentlichen radial orientierte Öffnungsmittenachse (O) aufweist, dass ein den ersten Kanalöffnungsbereich (76) bereitstellender erster Kanalabschnitt (84) des Verbrennungsluftdurchtrittskanals (74) eine im Wesentlichen radial orientierte Kanalmittenachse (M₁) aufweist, und dass die Kanalmittenachse (M₁) bezüglich der Öffnungsmittenachse (O) in Richtung der Gehäuselängsachse (L) versetzt ist.

3. Fahrzeugheizgerät nach Anspruch 2, **dadurch gekennzeichnet, dass** der Verbrennungsluftdurchtrittskanal (74) mit seinem zweiten Kanalöffnungsbereich (78) an der ersten Körperseite (68) des Anschlusseinheitkörpers (66) zur Verbrennungslufteintrittsöffnung (56) offen ist, und dass an einer von der ersten Körperseite (68) abgewandten zweiten Körperseite (80) des Anschlusseinheitkörpers (66) ein den ersten Kanalabschnitt (84) wenigstens teilweise bereitstellender Verbrennungslufteinlassstutzen (82) hervorsteht.

4. Fahrzeugheizgerät nach einem der vorangehenden, **dadurch gekennzeichnet, dass** in dem Anschlusseinheitkörper (66) ein von dem ersten Kanalabschnitt (84) zu dem zweiten Kanalöffnungsbereich (78) führender und den zweiten Kanalöffnungsbereich (78) bereitstellender zweiter Kanalabschnitt (86) vorgesehen ist, wobei der zweite Kanalabschnitt (86) eine zu der Kanalmittenachse (M₁) des ersten Kanalabschnitts (84) angewinkelte Kanalmittenachse (M₂) aufweist.

5. Fahrzeugheizgerät nach einem der vorangehenden Ansprüche, **dadurch gekennzeichnet, dass** das Dichtelement (48) mit einem ersten Dichtelementenbereich (50) zwischen einer Stirnseite (46) der Gehäuseumfangswand (34) und einer dieser gegenüberliegenden Stirnseite (52) des Verbrennungsluftgebläsegehäuses (44) positioniert ist, mit einem zweiten Dichtelementenbereich (88) sich entlang eines Randbereichs der Verbrennungslufteintrittsöffnung (56) erstreckend zwischen dem Verbrennungsluftgebläsegehäuse (44) und der Verbrennungsluftanschlusseinheit (64) positioniert ist und mit einem dritten Dichtelementenbereich (96) in eine in der Gehäuseumfangswand (34) ausgebildete und in Richtung der Stirnseite (46) der Gehäuseumfangswand (34) offene, von einer Brennstoffleitung (94) durchsetzte Brennstoffleitungsdurchtrittsaussparung (92) eingreifend positioniert ist.

6. Fahrzeugheizgerät nach einem der vorangehenden Ansprüche, **dadurch gekennzeichnet, dass** die Verbrennungsluftanschlusseinheit (64) eine Brennstoffleitungsdurchtrittsöffnung (95) aufweist.

7. Fahrzeugheizgerät nach Anspruch 5 und Anspruch 6, **dadurch gekennzeichnet, dass** das Dichtelement (48) mit seinem dritten Dichtelementenbereich (96) sich entlang eines Randbereichs der Brennstoffleitungsdurchtrittsaussparung (92) und der Brennstoffleitungsdurchtrittsöffnung (95) erstreckend zwischen der Gehäuseumfangswand (34) und der Verbrennungsluftanschlusseinheit (64) positioniert ist.

8. Fahrzeugheizgerät nach einem der vorangehenden Ansprüche, **dadurch gekennzeichnet, dass** die Verbrennungsluftanschlusseinheit (64) eine Abgasauslassdurchtrittsöffnung (98) aufweist, und dass ein an dem Heizgerätegehäuse (12) vorgesehener Abgasauslassstutzen (30) sich durch die Abgasauslassdurchtrittsöffnung (98) hindurch erstreckt.

9. Fahrzeugheizgerät nach einem der vorangehenden Ansprüche, **dadurch gekennzeichnet, dass** an der Verbrennungsluftanschlusseinheit (64) eine Montageformation (102) zur festen Anbringung des Fahrzeugheizgeräts (10) an einem Heizgeräteträger vorgesehen ist.

10. Fahrzeugheizgerät nach Anspruch 9, **dadurch gekennzeichnet, dass** die Montageformation (102) eine Mehrzahl von Montagestiften (100) umfasst.

11. Fahrzeugheizgerät nach einem der vorangehenden Ansprüche, **dadurch gekennzeichnet, dass** das Heizgerätegehäuse (12) in einem Außengehäuse (104) aufgenommen ist, und dass in dem Außengehäuse (104) eine die Verbrennungsluftanschlusseinheit (64) aufnehmende Anschlusseinheitsöffnung (108) vorgesehen ist.

12. Fahrzeugheizgerät nach Anspruch 11, **dadurch gekennzeichnet, dass** ein die Verbrennungsluftanschlusseinheit (64) bezüglich des Außengehäuses (104) gasdicht abschließendes Anschlusseinheit-Dichtelement (114) vorgesehen ist.

13. Fahrzeugheizgerät nach Anspruch 12 und Anspruch 3 und Anspruch 5 und Anspruch 8 und Anspruch 10, **dadurch gekennzeichnet, dass** das Anschlusseinheit-Dichtelement (114) in Zuordnung zu dem Verbrennungslufteinlassstutzen (82), der Brennstoffleitung (94), dem Abgasauslassstutzen (30) und jedem Montagestift (100) jeweils eine davon durchsetzte und bezüglich diesem einen gasdichten Abschluss bereitstellende Durchtrittsöffnung (120, 122, 124, 126) aufweist.

## Claims

1. Vehicle heater, comprising:
- a heater housing (12), which is elongated in the direction of a housing longitudinal axis (L), with a housing circumferential wall (34) defining a combustion air flow space (40) in the radially outward direction,
- a combustion chamber assembly unit (14), which is carried on the heater housing (12), with a combustion chamber (20) receiving combustion air from the combustion airflow space (40),
- a combustion air blower (42) with a combustion air blower housing (44) carried on the heater housing (12), wherein a combustion air inlet opening (56) is provided in the combustion air blower housing (44) for the inlet of combustion air into the combustion air blower (42), and
- a combustion air connection unit (64), which is carried on the heater housing (12), with a combustion air passage duct (74), wherein the combustion air passage duct (74) is open in the outward direction in a first duct opening area (76) for receiving combustion air and the combustion air passage duct (74) is open towards the combustion air inlet opening (56) in a second duct opening area (78),
wherein the combustion air connection unit (64) has a plate-shaped connection unit body (66), wherein the connection unit body (66) is positioned with a first body side (68) located opposite an outer side (70) of the housing circumferential wall (34) and an outer side (72) of the combustion air blower housing (44),
**characterized in that** a sealing element (48) is provided, which seals the combustion air blower housing (44) in a gastight manner in relation to the heater housing (12), seals the combustion air blower housing (44) in a gastight manner in relation to the combustion air connection unit (64) and seals the heater housing (12) in a gastight manner in relation to the combustion air connection unit (64).

2. Vehicle heater in accordance with claim 1, **characterized in that** the combustion air inlet opening (56) has an opening central axis (O) that has an essentially radial orientation, that a first duct section (84) of the combustion air passage duct (74), which provides the first duct opening area (76), has a duct central axis (M₁) that has an essentially radial orientation, and that the duct central axis (M₁) is offset in the direction of the housing longitudinal axis (L) in relation to the opening central axis (O).

3. Vehicle heater in accordance with claim 2, **characterized in that** the combustion air passage duct (74) is open with its second duct opening area (78) towards the combustion air inlet opening (56) on the first body side (68) of the connection unit body (66), and that a combustion air inlet pipe (82), which at least partially provides the first duct section (84), protrudes on a second body side (80) of the connection unit body (66), which faces away from the first body side (68).

4. Vehicle heater in accordance with one of the preceding claims, **characterized in that** a second duct section (86), which leads from the first duct section (84) to the second duct opening area (78) and provides the second duct opening area (78), is provided in the connection unit body (66), wherein the second duct section (86) has a duct central axis (M₂) that is bent at an angle to the duct central axis (M₁) of the first duct section (84).

5. Vehicle heater in accordance with one of the preceding claims, **characterized in that** the sealing element (48) is positioned with a first sealing element area (50) between a front side (46) of the housing circumferential wall (34) and a front side (52) of the combustion air blower housing (44), which is located opposite this front side (46), is positioned with a second sealing element area (88) extending along an edge area of the combustion air inlet opening (56) between the combustion air blower housing (44) and the combustion air connection unit (64) and is positioned with a third sealing element area (96) meshing with a fuel line passage recess (92), which is formed in the housing circumferential wall (34), is open in the direction of the front side (46) of the housing circumferential wall (34), and through which a fuel line (94) passes.

6. Vehicle heater in accordance with one of the preceding claims, **characterized in that** the combustion air connection unit (64) has a fuel line passage opening (95).

7. Vehicle heater in accordance with claim 5 and claim 6, **characterized in that** the sealing element (48) is positioned with its third sealing element area (96) between the housing circumferential wall (34) and the combustion air connection unit (64) extending along an edge area of the fuel line passage recess (92) and the fuel line passage opening (95).

8. Vehicle heater in accordance with one of the preceding claims, **characterized in that** the combustion air connection unit (64) has a waste gas outlet passage opening (98), and that a waste gas outlet pipe (30) provided on the heater housing (12) extends through the waste gas outlet passage opening (98).

9. Vehicle heater in accordance with one of the preceding claims, **characterized in that** a mounting formation (102) is provided at the combustion air connection unit (64) for the fixed mounting of the vehicle heater (10) on a heater carrier.

10. Vehicle heater in accordance with claim 9, **characterized in that** the mounting formation (102) comprises a plurality of mounting pins (100).

11. Vehicle heater in accordance with one of the preceding claims, **characterized in that** the heater housing (12) is accommodated in an outer housing (104), and that a connection unit opening (108), which accommodates the combustion air connection unit (64), is provided in the outer housing (104).

12. Vehicle heater in accordance with claim 11, **characterized in that** a connection unit sealing element (114) is provided, which seals the combustion air connection unit (64) in a gastight manner in relation to the outer housing (104).

13. Vehicle heater in accordance with claim 12 and claim 3 and claim 5 and claim 8 and claim 10, **characterized in that** the connection unit sealing element (114) has a passage opening (120, 122, 124, 126), through each of which the connection unit sealing element passes and which provides a gastight sealing in relation to same in association with the combustion air inlet pipe (82), with the fuel line (94), with the waste gas outlet pipe (30) and with each mounting pin (100).

## Revendications

1. Appareil de chauffage pour véhicule, comprenant :
- un boîtier de chauffage (12), qui est allongé dans la direction d'un axe longitudinal de boîtier (L), avec une paroi circonférentielle de boîtier (34) définissant un espace d'écoulement d'air de combustion (40) dans la direction radialement extérieure,
- une unité d'assemblage de chambre de combustion (14), qui est portée sur le boîtier d'appareil de chauffage (12), avec une chambre de combustion (20) recevant de l'air de combustion provenant de l'espace d'écoulement d'air de combustion (40),
- un ventilateur d'air de combustion (42) avec un boîtier de ventilateur d'air de combustion (44) porté sur le boîtier d'appareil de chauffage (12), dans lequel une ouverture d'entrée d'air de combustion (56) est prévue dans le boîtier de ventilateur d'air de combustion (44) pour l'entrée de l'air de combustion dans le ventilateur d'air de combustion (42), et
- une unité de raccordement d'air de combustion (64), qui est portée sur le boîtier d'appareil de chauffage (12), avec un conduit de passage d'air de combustion (74), dans lequel le conduit de passage d'air de combustion (74) est ouvert dans la direction vers l'extérieur dans une première zone d'ouverture de conduit (76) pour recevoir l'air de combustion et le conduit de passage d'air de combustion (74) est ouvert vers l'ouverture d'entrée d'air de combustion (56) dans une deuxième zone d'ouverture de conduit (78),
dans lequel l'unité de raccordement d'air de combustion (64) a un corps d'unité de raccordement en forme de plaque (66), dans lequel le corps d'unité de raccordement (66) est positionné avec un premier côté de corps (68) en face d'un côté extérieur (70) de la paroi circonférentielle de boîtier (34) et d'un côté extérieur (72) du boîtier de ventilateur d'air de combustion (44),
**caractérisé en ce qu'**il est prévu un élément d'étanchéité (48) qui rend étanche au gaz le boîtier de ventilateur d'air de combustion (44) par rapport au boîtier d'appareil de chauffage (12), qui rend étanche au gaz le boîtier de ventilateur d'air de combustion (44) par rapport à l'unité de raccordement d'air de combustion (64) et qui rend étanche au gaz le boîtier d'appareil de chauffage (12) par rapport à l'unité de raccordement d'air de combustion (64).

2. Appareil de chauffage pour véhicule selon la revendication 1, **caractérisé en ce que** l'ouverture d'entrée d'air de combustion (56) présente un axe central d'ouverture (O) orienté essentiellement radialement, **en ce qu'**une première section de conduit (84) du conduit de passage d'air de combustion (74), qui fournit la première zone d'ouverture de conduit (76), présente un axe central de conduit (M₁) orienté essentiellement radialement, et **en ce que** l'axe central de conduit (M₁) est décalé par rapport à l'axe central d'ouverture (O) dans la direction de l'axe longitudinal de boîtier (L).

3. Appareil de chauffage pour véhicule selon la revendication 2, **caractérisé en ce que** le conduit de passage d'air de combustion (74) est ouvert avec sa deuxième zone d'ouverture de conduit (78) vers l'ouverture d'entrée d'air de combustion (56) sur le premier côté de corps (68) du corps d'unité de raccordement (66), et **en ce qu'**un tube d'entrée d'air de combustion (82), qui fournit au moins partiellement la première section de conduit (84), fait saillie sur un deuxième côté de corps (80) du corps d'unité de raccordement (66), qui est opposé au premier côté de corps (68).

4. Appareil de chauffage pour véhicule selon l'une des revendications précédentes, **caractérisé en ce qu'**il est prévu dans le corps de l'unité de raccordement (66) une deuxième section de conduit (86) qui mène de la première section de conduit (84) à la deuxième zone d'ouverture de conduit (78) et qui fournit la deuxième zone d'ouverture de conduit (78), la deuxième section de conduit (86) présentant un axe central de conduit (M2) qui est coudé par rapport à l'axe central de conduit (M1) de la première section de conduit (84).

5. Appareil de chauffage pour véhicule selon l'une des revendications précédentes, **caractérisé en ce que** l'élément d'étanchéité (48) est positionné avec une première zone d'élément d'étanchéité (50) entre un côté frontal (46) de la paroi circonférentielle de boîtier (34) et un côté frontal (52) du boîtier de ventilateur d'air de combustion (44), qui est situé à l'opposé de ce côté frontal (46), est positionné avec une deuxième zone d'élément d'étanchéité (88) s'étendant le long d'une zone de bord de l'ouverture d'entrée d'air de combustion (56) entre le boîtier de ventilateur d'air de combustion (44) et l'unité de raccordement d'air de combustion (64) et est positionné avec une troisième zone d'élément d'étanchéité (96) s'engrenant avec un évidement de passage de conduite de carburant (92), qui est formé dans la paroi circonférentielle de boîtier (34), est ouvert dans la direction du côté avant (46) de la paroi circonférentielle de boîtier (34), et à travers lequel une conduite de carburant (94) passe.

6. Appareil de chauffage pour véhicule selon l'une des revendications précédentes, **caractérisé en ce que** l'unité de raccordement d'air de combustion (64) présente une ouverture de passage de conduite de carburant (95).

7. Appareil de chauffage pour véhicule selon la revendication 5 et la revendication 6, **caractérisé en ce que** l'élément d'étanchéité (48) est positionné avec sa troisième zone d'élément d'étanchéité (96) entre la paroi circonférentielle de boîtier (34) et l'unité de raccordement d'air de combustion (64) s'étendant le long d'une zone de bord de l'évidement de passage de conduite de carburant (92) et de l'ouverture de passage de conduite de carburant (95).

8. Appareil de chauffage pour véhicule selon l'une des revendications précédentes, **caractérisé en ce que** l'unité de raccordement d'air de combustion (64) présente une ouverture de passage de sortie de gaz d'échappement (98), et **en ce qu'**un tuyau de sortie de gaz d'échappement (30) prévu sur le boîtier d'appareil de chauffage (12) s'étend à travers l'ouverture de passage de sortie de gaz d'échappement (98).

9. Appareil de chauffage pour véhicule selon l'une des revendications précédentes, **caractérisé en ce qu'**une formation de montage (102) est prévue sur l'unité de raccordement d'air de combustion (64) pour le montage fixe du chauffage de véhicule (10) sur un support de chauffage.

10. Appareil de chauffage pour véhicule selon la revendication 9 **caractérisé en ce que** la formation de montage (102) comprend une pluralité de broches de montage (100).

11. Appareil de chauffage pour véhicule selon l'une des revendications précédentes, **caractérisé en ce que** le boîtier d'appareil de chauffage (12) est logé dans un boîtier extérieur (104), et **en ce qu'**une ouverture d'unité de raccordement (108), qui reçoit l'unité de raccordement d'air de combustion (64), est prévue dans le boîtier extérieur (104).

12. Appareil de chauffage pour véhicule selon la revendication 11, **caractérisé en ce qu'**il est prévu un élément d'étanchéité (114) de l'unité de raccordement, qui assure l'étanchéité au gaz de l'unité de raccordement d'air de combustion (64) par rapport au boîtier extérieur (104).

13. Appareil de chauffage pour véhicule selon la revendication 12, la revendication 3, la revendication 5, la revendication 8 et la revendication 10, **caractérisé en ce que** l'élément d'étanchéité de l'unité de raccordement (114) présente une ouverture de passage (120, 122, 124, 126), à travers laquelle passe l'élément d'étanchéité de l'unité de raccordement et qui assure une étanchéité au gaz par rapport à celle-ci en association avec le tuyau d'entrée d'air de combustion (82), avec la conduite de carburant (94), avec le tuyau de sortie des gaz d'échappement (30) et avec chaque broche de montage (100).
